# EUROPÄISCHE PATENTSCHRIFT

(11) **EP 0 982 867 B1**
(45) Veröffentlichungstag und Bekanntmachung des Hinweises auf die Patenterteilung: **28.12.2005**
(21) Anmeldenummer: 99115813.0
(22) Anmeldetag: 11.08.1999
(51) Int. Cl.: H04B 1/08, H01Q 1/14, H01Q 17/00, H02J 13/00, H04B 1/03, H04B 1/38, E04F 19/08

(54) **Unterputzmontage Modul mit einer schwenkbaren Antenne**
Flush-mounting module with rotatable antenna
Module encastrable avec une antenne pivotante

(30) Priorität: 27.08.1998 DE 19838912
(43) Veröffentlichungstag der Anmeldung: 01.03.2000
(73) Patentinhaber: ROBERT BOSCH GMBH, 70442 Stuttgart (DE)
(72) Erfinder: Kleyer, Andreas, 70597 Stuttgart (DE); Thuersam, Markus, 71263 Weil Der Stadt (DE)

(56) Entgegenhaltungen:
- DE-A- 4 411 290
- DE-A- 4 422 281
- US-A- 4 464 792
- PATENT ABSTRACTS OF JAPAN vol. 1998, no. 08, 30. Juni 1998 (1998-06-30) & JP 10 079681 A (JIMBO ELECTRIC CO LTD;USHITA TAKASHI), 24. März 1998 (1998-03-24)
- PATENT ABSTRACTS OF JAPAN vol. 1999, no. 05, 31. Mai 1999 (1999-05-31) & JP 11 031201 A (YAMATAKE HONEYWELL CO LTD), 2. Februar 1999 (1999-02-02)

## Beschreibung

### Stand der Technik

Die Erfindung geht von der Gattung aus, wie im unabhängigen Anspruch 1 angegeben.

Für die Netzstromversorgung in Häusern ist es bekannt, in Unterputzdosen elektrische Module, beispielsweise Schalter oder Steckdosen einzusetzen. Solch ein Modul kann auch als elektronisches Steuergerät ausgebildet sein (Deutsches Gebrauchsmusterschrift 91 12 055) oder als Fernbedienungsanordnung (Deutsche Patentschrift 32 14 156) für Infrarot-Fernbedienung eines elektrischen Gerätes. Ebenso ist es bekannt, Installationsgeräte für Telekommunikationsanlagen (Deutsche Gebrauchsmusterschrift 93 03 921) oder einen Einbau-Aktor für den europäischen Installationsbus einer Domotikanlage (Deutsche Gebrauchsmusterschrift 29 520 390) in eine Unterputzdose zu legen.

Darüberhinaus sind für Funkalarmanlagen bereits Funkmodule wie Funk-Kontaktmelder, Funk-Glasbruchmelder u.s.w. im Handel. Eine Einbruchmeldeanlage kann Teil einer Domotik-Anlage sein. Eine solche Domotik-Anlage verbindet technische Funktionen mit Anwendungen im Haushalt. Hierzu gehören beispielsweise die Sicherheitstechnik, die Heizungs-, Lüftungs- und Klimasteuerung, die Beleuchtungs- und Jalousiesteuerung sowie das Lastmanagement. Mit der Integration der Hausgeräte und weiterer technischer Geräte im Haus wird die Domotik laufend erweitert. Dazu gehört die Steuerung des Herdes, der Waschmaschine, die Rolladensteuerung, die Steuerung des Garagentores, die Fernabfrage beispielsweise des Gas- oder Wasserzählers u.s.w. Die Domotik ist als geräte- und anwendungsübergreifendes System konzipiert, das alle im Haus oder in der Wohnung vorhandenen Einzelkomponenten und Anwendungen zu einem System integriert. Der Datenaustausch zwischen Sensoren, Aktoren und einer Zentrale erfolgt dabei über den sogenannten europäischen Installationsbus (EIB)der European Installation Bus Association (EIBA), einer Organisation, in der sich die führenden europäischen Elektroinstallationsfirmen zusammengeschlossen haben.

Auch hier besteht das Bestreben, an den Bus anzuschließende Module unter Putz zu verlegen. Darüberhinaus gibt es Überlegungen, Module drahtlos, d.h. über Funk, an den Bus anzuschließen. Befinden sich nun in der Nähe von Funk-Sendern oder -Empfängern Decken und/oder Wände, so wirken sich diese zumeist ungünstig auf das Senden und Empfangen elektromagnetischer Wellen aus. Abhängig von dem Material der Wand werden die elektromagnetischen Wellen durch die Nähe der Wand stark bedämpft oder es kommt zu Reflexionen. Dies gilt insbesondere für Unterputzinstallationen, bei denen sich ein Modul innerhalb einer Wand befindet und bündig mit der Wandoberfläche abschließt. Der bündige Abschluss wird im allgemeinen mit Hilfe eines Tragrahmens aus Blech erzielt, der von außen auf der Wand aufliegt, wobei das restliche Modul in einer Einbaudose innerhalb einer Einbauausnehmung in der Wand versenk ist.

Ein solches Modul wird in der deutschen Patentanmeldung DE 4411290 offenbart.

In der deutschen Patentanmeldung 198 15 986 ist ein Funkmodul für Unterputzmontage, mit einem metallischen, flanschartigen Tragrahmen vorgeschlagen worden, der bei der Unterputzmontage von außen auf einer Wand aufliegt, welche eine Einbauausnehmung umgibt. Zur Verbesserung der Funkabstrahlung oder des Funkempfangs ist der Tragrahmen zugleich Element einer Funkantenne des Moduls.

In Unterputzdosen montierte Sende-/Empfangsmodule für elektromagnetische Wellen haben den systembedingten Nachteil, daß entweder spezielle konstruktive Maßnahmen am Modul notwendig sind, um eine Antenne mit gutem Wirkungsgrad aufzunehmen, oder daß nur sehr kleine Bauformen möglich sind, wenn das komplette Modul inklusive der Antenne in der - in die Standardunterputzdose zu montierenden - Einheit untergebracht werden muß. Die geringen mechanischen Abmessungen bewirken bei den vorzugsweise zur Anwendung kommenden magnetisch wirkenden Antennen einen schlechten Wirkungsgrad.

### Vorteile der Erfindung

Der Anmeldungsgegenstand mit den Merkmalen des Anspruches 1 hat folgenden Vorteil:

Die Bauform aller Antennenmittel des Moduls kann mit einfachen Mitteln in ihrer Dimension vergrößert werden, um den Wirkungsgrad zu verbessern. Die Montage des Moduls mit Antenne bleibt einfach, und bei einer Installation im Sichtbereich ist die Antenne nicht erkennbar. Dies ist ein Vorteil gegenüber bekannten Antennenkonstruktionen, die sichtbar aus einem Modul herausstehen.

Die Antenne kann robust gestaltet sein, so dass sie den rauhen Bedingungen des Installationshandwerks gerecht wird. Für den Benutzer der Installationstechnik ist die Antenne unsichtbar.

Vorteilhafte Weiterbildungen sind in den abhängigen Ansprüchen angegeben, deren Merkmale auch, soweit sinnvoll, miteinander kombiniert werden können.

### Zeichnung

Ein Ausführungsbeispiel der Erfindung ist in der Zeichnung dargestellt und im Folgenden näher erläutert. Dabei sind bei mehreren Figuren jeweils dieselben Bezugszeichen für im Wesentlichen gleiche Teile verwendet. Schematisch ist gezeigt in
- Figur 1:: eine Aufsicht auf ein Modul für Unterputz-Montage nach der Erfindung,
- Figur 2:: eine Seitenansicht desselben Moduls,
- Figur 3:: eine Aufsicht auf das Modul bei abseits montierter Antenne,
- Figur 4:: eine Seitenansicht des Moduls nach Figur 3,
- Figur 5:: einige Einzelheiten zu den Figuren 3 und 4,
- Figur 6:: ein Blockschaltbild zu den Figuren 1 bis 4,
- Figur 7:: eine Aufsicht auf ein alternatives Modul für Unterputz-Montage nach der Erfindung,
- Figur 8:: eine Seitenansicht des Moduls nach Figur 7,
- Figur 9:: eine Aufsicht auf das alternative Modul bei abseits montierter Antenne,
- Figur 10:: eine Seitenansicht des Moduls nach Figur 9,
- Figur 11:: einige Einzelheiten zu den Figuren 9 und 10,
- Figur 12:: ein Blockschaltbild zu den Figuren 9 und 10.

### Beschreibung des Ausführungsbeispiels

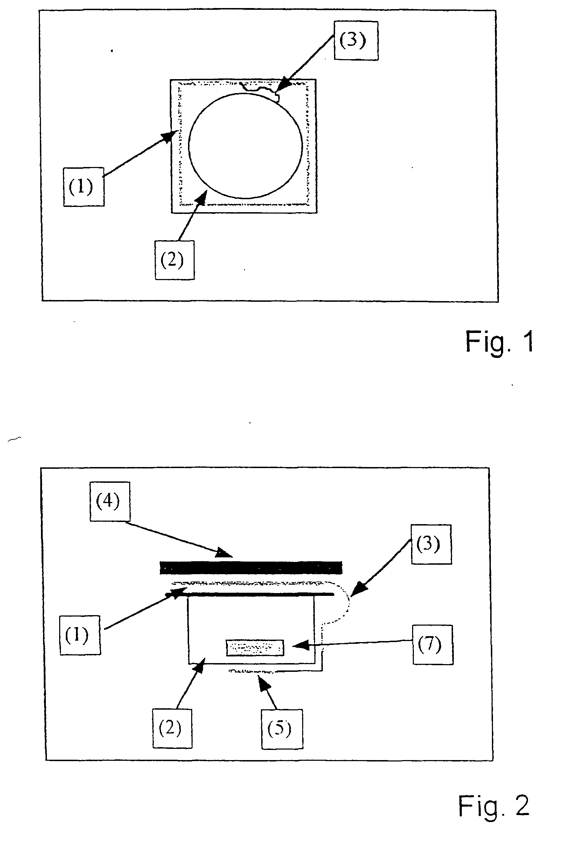

Von einem Modul nach der Erfindung zeigt Figur 1 eine Aufsicht ohne Abdeckblende.

Die zugehörige Seitenansicht ist in Figur 2 dargestellt. Eine Funkeinrichtung 2 ist über eine Leitung 3 mit einer Antenne 1 verbunden, die nach dem Unter-Putz-Einbau des Moduls durch eine auf dem Putz montierte Abdeckblende 4 abgedeckt ist. Die Leitung 3 ist aber nicht unmittelbar mit der Funkeinrichtung 2 verbunden, sondern über einen Schwingkreis 5, der mit einem Antennenelement 7 der Funkeinrichtung 2 gekoppelt ist. Das Antennenelement 7 wirkt als magnetische Antenne und ist in der Region des Bodens des Moduls angebracht. Mit dem magnetischen Antennenelement 7 allein kann ein Modul kleiner Funkreichweite realisiert werden.

Um den Wirkungsgrad und damit die Reichweite des Moduls zu verbessern, kann im Bedarfsfall außen am Boden des Moduls der auf die Arbeitsfrequenz des Moduls abgestimmte Schwingkreis 5 angebracht sein. Dieser Schwingkreis wirkt im Falle des Sendebetriebes zusammen mit dem magnetischen Antennenelement 7 einem Übertrager vergleichbar und überträgt einen Großteil der elektromagnetischen Strahlung auf die über die Leitung 3 letztlich mit der Funkeinrichtung 2 "verbundene" Antenne 1 weiter. Diese Antenne 1 kann als magnetische oder elektrisch wirkende Antenne ausgeführt sein und hat aufgrund ihrer deutlich größeren mechanischen Abmessungen einen besseren Wirkungsgrad als das Antennenelement 7. Wird das Modul im Sichtbereich angebracht, so kann die Antenne 1 unterhalb der Abdeckblende 4 aus Kunststoff angebracht sein.

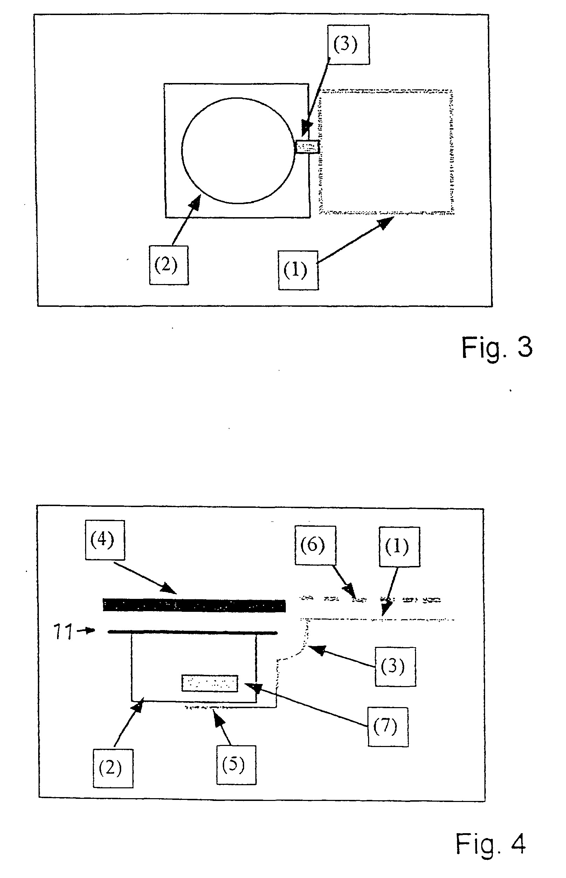

Handelt es sich um ein Modul, das nicht im Sichtbereich angeordnet ist, so kann entsprechend Figur 3 die Leitung 3 durch den Abdeckrahmen oder um diesen herum (Figur 4) nach außen geführt sein, so daß die Absorption der Strahlung durch einen metallischen Tragrahmen 11 weiter reduziert wird. Die Antenne 1 kann dann von dem restlichen Modul abgesetzt montiert sein. Unter ungünstigen Umgebungsbedingungen kann die über die Leitung 3 angeschlossene Antenne 1 auch im Sichtbereich unter einer Tapete 6 oder einer sonstigen Verkleidung angebracht sein.

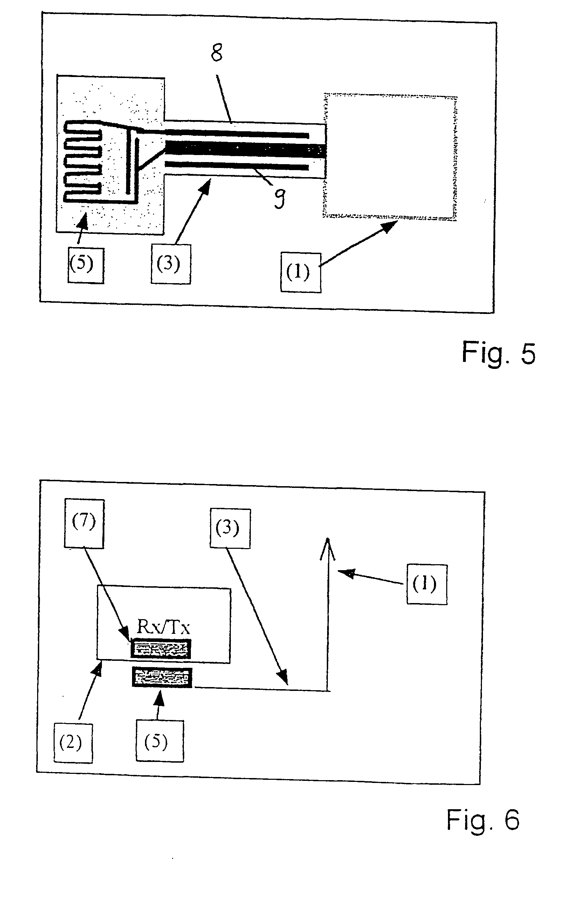

Wie Figur 5 zeigt, kann der abgestimmte Schwingkreis 5, die Leitung 3 (ausgeführt als sog. Stripline) sowie die Antenne 1 vorteilhafterweise auf einer flexiblen Folie 8 (insbesondere aus Kunststoff) aufgebracht sein, die mit Leitern versehen ist. Die Folie 8 kann mit einem geschützten Klebefilm ausgestattet sein, wodurch der Montageaufwand auf ein Minimum reduzierbar ist.

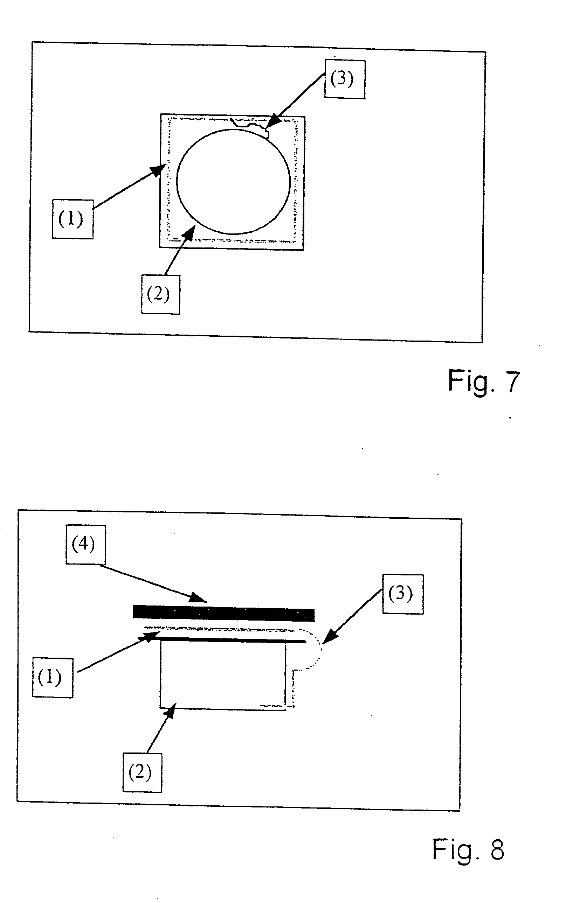

Figur 6 zeigt das Blockschaltbild zu den Figuren 1 bis 4. Durch die Bezeichnung Rx/Tx ist angedeuted, daß das magnetische Antennenelement 7 mit einem Empfänger (Rx) und/oder Sender (Tx) verbunden ist.

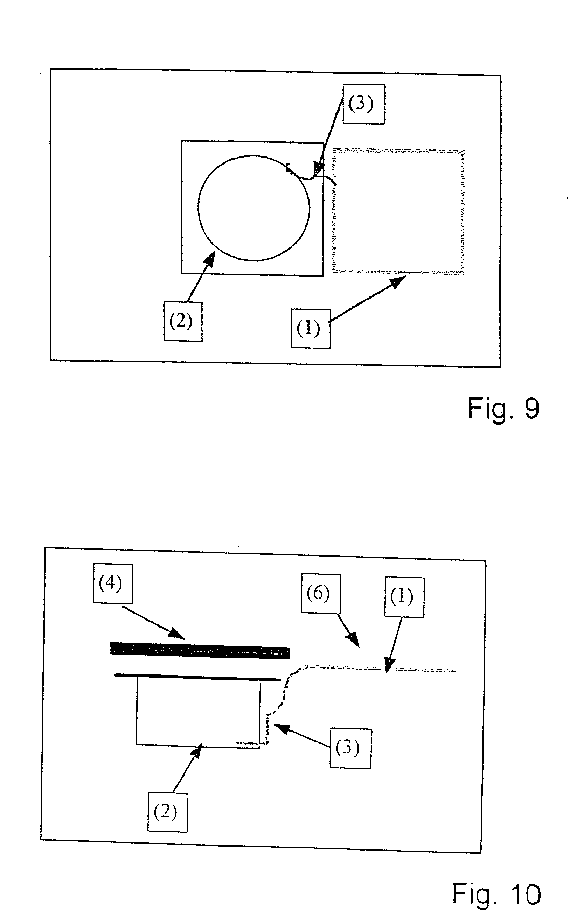

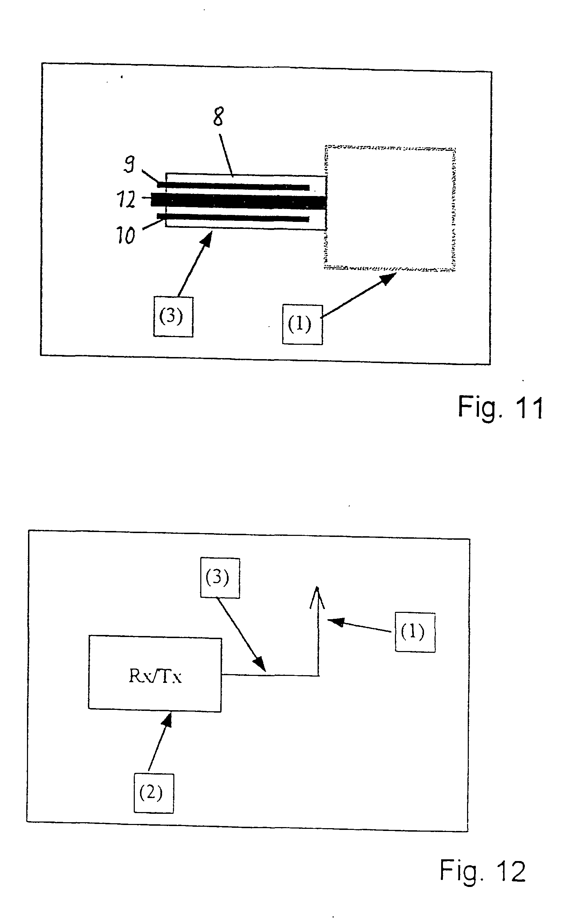

Wie die Figuren 7 bis 12 zeigen, kann bei einem kostenreduzierten Modul auf den Übertrager verzichtet werden und die Leistung direkt von der Funkeinrichtung 2 auf die Antenne 1 galvanisch gekoppelt werden. Die Figuren 7 bis 12 entsprechen ansonsten den Figuren 1 bis 6. Die Bezugszeichen 9 und 10 in Figur 11 bezeichnen Masseleitungen, die mit Erdpotential verbunden sind. Der Hochfrequenzanschluß für die Funkeinrichtung 2 ist mit 12 bezeichnet.

Für den Empfangsbetrieb gelten die vorbeschriebenen Ausführungen sinngemäß.

## Patentansprüche

1. Modul mit einer Funkeinrichtung (2), für Unterputzmontage und mit einer Antenne (1), **dadurch gekennzeichnet, dass** die Antenne (1) zumindest über eine Leitung (3) mit der Funkeinrichtung (2) gekoppelt, die Antenne (1) auf einer flexiblen Folie (8) aufgebracht und gemeinsam mit der Leitung (3) so gestaltet ist, dass die Antenne (1) wahlweise unter einer Aufputz-Abdeckblende (4) des Moduls oder neben dem Modul unter Putz, einem Anstrich oder einer Tapete (6) Platz finden kann.

2. Modul nach Anspruch 1, **dadurch gekennzeichnet, dass** zusätzlich ein magnetisches Antennenelement (7) vorgesehen ist, an welches die Leitung (3) magnetisch angekoppelt ist.

3. Modul nach Anspruch 2, **dadurch gekennzeichnet, dass** die Leitung (3) über einen Schwingkreis (5) mit dem Antennenelement (7) gekoppelt ist.

4. Modul nach Anspruch 1, **dadurch gekennzeichnet, dass** die Leitung (3) galvanisch mit der Funkeinrichtung (2) gekoppelt ist.

5. Modul nach einem der vorangehenden Ansprüche, **dadurch gekennzeichnet, dass** die Leitung (3) von der Folie (8) getragen ist.

6. Modul nach Anspruch 3 und 5, **dadurch gekennzeichnet, dass** die Folie (8) auch Teile des Schwingkreises (5) trägt.

## Claims

1. Module having a radio device (2), for flush mounting and having an antenna (1), **characterized in that** the antenna (1) is coupled at least via a line (3) to the radio device (2), the antenna (1) is fitted on a flexible sheet (8) and is designed together with the line (3) such that the antenna (1) can optionally be located under a surface-mounting cover panel (4) for the module or under the plaster, paint or wallpaper (6) alongside the module.

2. Module according to Claim 1, **characterized in that** a magnetic antenna element (7) is additionally provided, to which the line (3) is magnetically coupled.

3. Module according to Claim 2, **characterized in that** the line (3) is coupled to the antenna element (7) via a resonant circuit (5).

4. Module according to Claim 1, **characterized in that** the line (3) is conductively coupled to the radio device (2).

5. Module according to one of the preceding claims, **characterized in that** the line (3) is supported by the sheet (8).

6. Module according to Claim 3 and 5, **characterized in that** the sheet (8) also supports parts of the resonant circuit (5).

## Revendications

1. Module encastrable avec un dispositif radio (2) et une antenne (1),
**caractérisé en ce que**
l'antenne (1) est couplée au dispositif radio (2) par au moins une ligne (3), déposée sur une feuille flexible (8) et configurée conjointement avec la ligne (3) de telle sorte que l'antenne (1) peut être disposée au choix soit sous un cache apparent (4) du module soit encastrée sous une peinture ou un papier peint (6) à côté du module.

2. Module selon la revendication 1,
**caractérisé par**
un élément d'antenne magnétique (7) supplémentaire auquel la ligne (3) est couplée magnétiquement.

3. Module selon la revendication 2,
**caractérisé en ce que**
la ligne (3) est couplée à l'élément d'antenne (7) par l'intermédiaire d'un circuit oscillant (5).

4. Module selon la revendication 1,
**caractérisé en ce que**
la ligne (3) est couplée galvaniquement au dispositif radio (2).

5. Module selon l'une quelconque des revendications précédentes,
**caractérisé en ce que**
la ligne (3) est portée par la feuille (8).

6. Module selon les revendications 3 et 5,
**caractérisé en ce que**
la feuille (8) porte également des parties du circuit oscillant (5).
